# EUROPEAN PATENT SPECIFICATION

(11) **EP 4 495 425 B1**
(45) Date of publication and mention of the grant of the patent: **01.04.2026**
(21) Application number: 24189512.7
(22) Date of filing: 18.07.2024
(51) Int. Cl.: F04B 49/035, F04B 53/10, F16K 15/18, F16K 31/122

(54) **COMBINED HIGH PRESSURE RELIEF AND BYPASS VALVES**
KOMBINIERTE HOCHDRUCKENTLÜFTUNGS- UND BYPASSVENTILE
SOUPAPES COMBINEES DE DECHARGE ET DE DERIVATION HAUTE PRESSION

(30) Priority: 21.07.2023 US 202318225102
(43) Date of publication of application: 22.01.2025
(73) Proprietor: Hamilton Sundstrand Corporation, Charlotte, NC 28217-4578 (US)
(72) Inventor: CORETTO, August M., Manchester,CT 06040 (US); SUSCA, Ryan, Windsor, CT 06095 (US)
(74) Representative: Dehns

(56) References cited:
- EP-B1- 1 593 856
- US-A- 5 984 148
- US-B1- 6 698 197

## Description

### BACKGROUND

### 1. Field

The present disclosure relates to pump systems, and more particularly to variable displacement pump systems, e.g., for fuel and/or actuation systems in aerospace applications.

### 2. Description of Related Art

Fuel system architectures, and fuel controls, such as those related to variable displacement pumps can require a large number of control valves to maintain operation of the pump throughout a turbine engine's mission cycle for example. This is due to various factors such as high variations between the flows demand at different stages of a typical mission cycle. In some instances, a fuel control can have as many as ten valves. Each valve may have a valve set, spring, closure, and associated wrapstock which can drive complexity and weight.

The conventional techniques have been considered satisfactory for their intended purpose. However, there is an ever present need for improved systems and methods for fuel system architectures. This disclosure provides a solution for this need.

EP 6,698,197 B1 describes a hydraulically actuated bypass valve. US 5,984,148 describes a self-cleaning pressure relief and bypass valve, dispensing apparatus and method. EP 1 593 856 B1 describes an integrated valve system.

### SUMMARY

A relief valve (RV) includes a valve housing having a control pressure port configured and adapted to be in fluid communication with an actuator, and a RV inlet port configured and adapted to be in fluid communication with an outlet line of a variable displacement pump. The RV is configured and adapted to change between a first function and a second function. The first function is a high pressure relief valve function and the second function is as a wind milling bypass function.

A valve sleeve is positioned within the valve housing. The valve sleeve is configured and adapted to translate axially along a longitudinal RV axis depending on the pressure in at least one of the RV inlet port or the control pressure port.

One or more embodiments include the system/apparatus of any previous paragraph, and wherein the RV can include a biasing element on a first side of the sleeve opposite from the RV inlet port.

One or more embodiments include the system/apparatus of any previous paragraph, and wherein the control pressure port can be on a second side of the sleeve opposite from the first side.

One or more embodiments include the system/apparatus of any previous paragraph, and wherein the valve sleeve can include a tapered end facing and in fluid communication with the RV inlet port.

One or more embodiments include the system/apparatus of any previous paragraph, and wherein the valve sleeve can include a stepped portion axially spaced apart from the tapered end.

One or more embodiments include the system/apparatus of any previous paragraph, and wherein an outer surface of the stepped portion can face and can be in fluid communication with the RV control pressure port.

In accordance with another aspect, a system includes a variable displacement pump (VDP) in fluid communication with an inlet line and with an outlet line. The VDP includes a variable displacement mechanism configured to vary pressure to the outlet line. The system includes a relief valve (RV) having a control pressure port and an RV inlet port in fluid communication with the outlet line and an RV outlet in fluid communication with a bypass line. The system includes an actuator operatively connected to the control pressure port of the RV to change function of the RV between a first function and a second function. The first function is a high pressure relief valve function and the second function is as a wind milling bypass function.

One or more embodiments include the system of any previous paragraph, and wherein the RV can include a valve sleeve configured and adapted to translate axially along a longitudinal RV axis depending on the pressure in at least one of the RV inlet port or the RV control pressure port.

One or more embodiments include the system of any previous paragraph, and wherein the RV can include a biasing element on a first side of the sleeve opposite from the RV inlet port.

One or more embodiments include the system of any previous paragraph, and wherein the control pressure port can be on a second side of the sleeve opposite from the first side.

One or more embodiments include the system of any previous paragraph, and wherein the valve sleeve can include a tapered end facing and in fluid communication with the RV inlet port.

One or more embodiments include the system of any previous paragraph, and wherein the valve sleeve can include a stepped portion axially spaced apart from the tapered end.

One or more embodiments include the system of any previous paragraph, and wherein an outer surface of the stepped portion can face and can be in fluid communication with the RV control pressure port.

One or more embodiments include the system of any previous paragraph, wherein the system can include a shut-off valve downstream from the VDP.

One or more embodiments include the system of any previous paragraph, wherein, when the shut-off valve is in the closed position, the RV can be configured and adapted to switch to the wind milling bypass function

One or more embodiments include the system of any previous paragraph, wherein, when the shut-off valve is in the open position, the RV can be configured and adapted to switch to the high pressure relief valve function.

In accordance with another aspect, a method includes receiving input indicative of flow demanded by a downstream system supplied from an outlet line of a variable displacement pump (VDP). The method includes controlling a relief valve (RV) to operate as a high pressure relief valve if the flow demanded by the downstream system is greater than a low flow threshold, and to recirculate flow from the outlet line to an input line in a windmill bypass function of the RV if the flow demanded by the downstream system is at or below the low flow threshold.

One or more embodiments include the method of any previous paragraph, wherein the method can include controlling an actuator operatively connected to control the RV to change function of the RV between a high pressure relief valve function and a windmill bypass function.

One or more embodiments include the method of any previous paragraph, and wherein changing to the high-pressure relief valve function from the windmill bypass function can include supplying a first pressure from the actuator to a RV control pressure port.

One or more embodiments include the method of any previous paragraph, and wherein changing between from the high-pressure relief valve function to the windmill bypass function can include supplying a second pressure from the actuator to the RV control pressure port.

One or more embodiments include the method of any previous paragraph, and wherein the second pressure can be greater than the first pressure.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing a dual functionality relief valve (RV) in fluid communication with a solenoid actuator; and
Fig. 2 is a schematic view of an embodiment of the RV of the system of Fig. 1, showing the RV in a closed position and showing a valve sleeve having a tapered end and a stepped portion in fluid communication with a RV control pressure port.

### DETAILED DESCRIPTION OF THE PREFERRED EMBODIMENTS

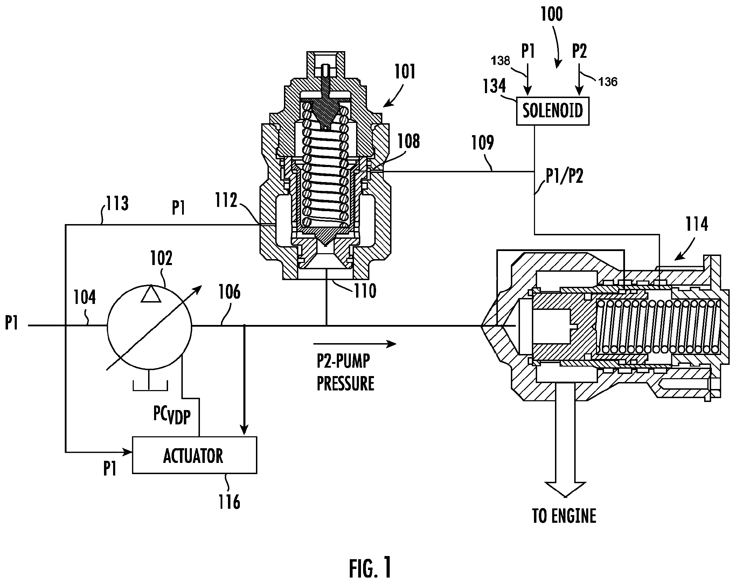

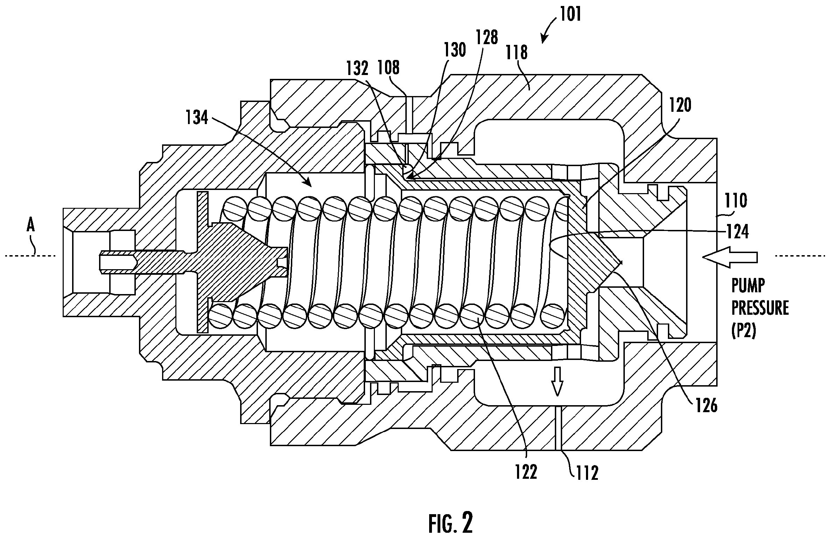

Reference will now be made to the drawings wherein like reference numerals identify similar structural features or aspects of the subject disclosure. For purposes of explanation and illustration, and not limitation, an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to provide high pressure relief and windmill bypass functions with a single relief valve for a variable displacement pump (VDP).

As shown in Fig. 1, a system 100 includes a variable displacement pump (VDP) 102 in fluid communication with an inlet line 104 and with an outlet line 106. VDP 102 includes a variable displacement mechanism configured to vary pressure to the outlet line 106. System 100 includes a relief valve (RV) 101, e.g., a combination Windmill Bypass Valve and High Pressure Relief Valve (WBV/HPRV), having a control pressure port 108. RV 101 includes an RV inlet port 110 in fluid communication with the outlet line 106 and an RV outlet 112 in fluid communication with a bypass line 113. System 100 includes a shut-off valve (SOV) 114 downstream from VDP 102. System 100 includes an actuator 134, e.g. a solenoid, EHSV, or the like, in fluid communication with control pressure port 108 of RV 101 by way of control pressure line 109 to change function of RV 101 between a first function and a second function. The first function is a HPRV function and the second function is as a wind milling bypass function. Both the SOV 114 and the combined WBV/HPRV (RV 101) are triggered via the actuator 134 (e.g., solenoid, EMID) for reduced complexity.

With continued reference to Fig. 1, when SOV 114 is in the closed position, RV 101 is configured and adapted to switch to the wind milling bypass function and open if pump outlet pressure (P2) meets the lower windmill bypass threshold. When SOV 114 is in the open position, RV 101 is configured and adapted to switch to the HPRV function. In this HPRV function, RV 101 is only opened if the pump outlet pressure P2 exceeds a high-pressure relief valve threshold (higher than the windmill bypass valve function pressure). In either scenario, if RV 101 is opened, RV outlet 112 is in fluid communication with bypass line 113 and bypass line 113 leads back to an inlet pump pressure (P1) upstream from VDP 102. VDP 102 is a direct control fuel pump paired with two valves, SOV 114 and RV 101. VDP 102 is operatively coupled to a separate VDP actuator 116, which provides a control pressure (PC_{VDP}) to VDP 102. VDP 102 is a direct control pumping element satisfies metering functionality while the SOV 114 and RV 101 satisfy leakage requirements to a downstream engine during shutoff, overpressurization protection, and windmilling protection.

As shown in Fig. 2, RV 101 includes a valve housing 118 defining control pressure port 108 configured and adapted to be in fluid communication with solenoid 134, and RV inlet port 110 configured and adapted to be in fluid communication with an outlet line 106 of VDP 102. RV 101 is configured and adapted to change between a first function and a second function, as described above. RV 101 includes a valve sleeve 120 positioned within valve housing 118. Valve sleeve 120 is configured and adapted to translate axially along a longitudinal RV axis A depending on the pressure in at least one of RV inlet port 110 or control pressure port 108.

With continued reference to Fig. 2, RV 101 includes a biasing element 122 on a first side 124 of sleeve 120 opposite from RV inlet port 110. Control pressure port 108 is on a second side of sleeve 120 opposite from first side 124. Valve sleeve 120 includes a tapered end 126 facing and in fluid communication with RV inlet port 110. Valve sleeve 120 includes a stepped portion 128 axially spaced apart from the tapered end 126. An outer surface 130 of stepped portion 128 is in fluid communication with RV control pressure port 108. RV control pressure port 108 is an additional port (not in typical HPRV) that allows wind milling bypass function to be activated by solenoid 134 by providing a larger area (outer surface 130 of stepped portion 128) for a control pressure from actuator 134 to act on. Solenoid 134 has a high-pressure input 136, e.g. P2 input, and a low pressure input 138, e.g. P1 input . Control pressure line 109 from actuator 134 can either provide a high-pressure (e.g., P2) or a low-pressure (e.g. P1), depending on the desired bypass function. When a high-pressure from actuator 134, e.g. P2, is triggered, it acts on outer surface 130 (by way of control pressure port 108 and a control pressure chamber 132), thereby reducing the set pressure needed at inlet port 110 of RV 101 (e.g., the pressure needed on tapered end 126 to move valve sleeve 120 into an open position) from an overpressure protection pressure (HPRV function) to windmill protection pressure (WBV function).

A method in accordance with embodiments of the present disclosure includes receiving input into an actuator, e.g., solenoid actuator 134, indicative of flow demanded by a downstream system, e.g., an engine, supplied from an outlet line, e.g. outlet line 106, of a variable displacement pump (VDP), e.g., VDP 102. The method includes controlling a relief valve (RV), e.g., RV 101, to operate as a high pressure relief valve (HPRV) if the flow demanded by the downstream system is greater than a low-flow threshold, and to operate as a windmill bypass valve if the flow demanded by the downstream system is at or below the low flow threshold. Operating as a windmill bypass valve involves recirculating flow from the outlet line to an input line, e.g. inlet line 107 at P1, or other area upstream from inlet line 107.

The method includes controlling the actuator operatively connected to control the RV to change function of the RV between a high pressure relief valve function and a windmill bypass function. Changing to the high-pressure relief valve function from the windmill bypass function includes supplying a first pressure, e.g., a control pressure via control pressure line 109, from the actuator to a RV control pressure port, e.g., control pressure port 108. Changing between from the high-pressure relief valve function to the windmill bypass function includes supplying a second pressure (higher than the first pressure) from the actuator to the RV control pressure port. The exact pressures for the first and second pressure may vary depending on the sizing of a valve sleeve, e.g., valve sleeve 120, of the RV. For example, depending on the size of the surface area of an outer surface, e.g., outer surface 130, of a stepped portion, e.g., stepped portion 128, or the size of the surface area for a tapered end, e.g., tapered end 126. When a high-pressure from the actuator is triggered, it acts on the outer surface and reduces the pressure needed to open the RV, thereby allowing the windmill bypass function (which is typically needed when the pump outlet pressure (P2) is at a lower pressure than that of a "high-pressure" P2 scenario). When a low-pressure from the actuator is triggered, it does not apply as much pressure to the valve sleeve and does not assist with opening the RV as much as when a high-pressure from the actuator is provided, thereby creating a HPRV function (which will require a "high-pressure" scenario for pump outlet pressure (P2)).

The embodiments of the present disclosure differ from other WBV/HPRV combinations because of the dual-activated WBV/HPRV and SOV system, and because the pressure area applications of the WBV/HPRV differ. The proposed WBV/HPRV pressure areas retain all of the components HPRV performance features and provide a way to more easily drop regulating pressure which may not be present in other combined WBV/HPRV valves. Systems and methods as disclosed herein provide potential benefits including the following. They can reduce valve count versus traditional systems. They can reduce the number if input output connections relative to more traditional systems. They can also eliminate the need for separate HPRV and WMBV (windmilling bypass valve) that are used in traditional systems. This reduces the volume of the controls components that surround the pump assembly (e.g. eliminating one valve, and the housing and hydraulic coring required to interact with the eliminated valve) and reduces fuel control leakages (reduces required horsepower/improves pumping efficiency).

The methods and systems of the present disclosure, as described above and shown in the drawings, provide for high pressure relief and windmill bypass functions with a single valve for a variable displacement pump (VDP). While the apparatus and methods of the subject disclosure have been shown and described with reference to preferred embodiments, those skilled in the art will readily appreciate that changes and/or modifications may be made thereto without departing from the scope of the claims.

## Claims

1. A relief valve "RV" comprising:
a valve housing (118) including:
a control pressure port (108) in fluid communication with an actuator;
an RV inlet port (110) in fluid communication with an outlet line of a variable displacement pump, wherein the RV is configured and adapted to change between a first function and a second function, wherein the first function is a high pressure relief valve function and the second function is as a wind milling bypass function, and **characterised by** further comprising a valve sleeve positioned within the valve housing (118), wherein the valve sleeve translates axially along a longitudinal RV axis depending on the pressure in at least one of the RV inlet port (110) or the control pressure port (108).

2. The relief valve as recited in claim 1, further comprising a biasing element on a first side of the sleeve opposite from the RV inlet port (110).

3. The relief valve as recited in claim 2, wherein the control pressure port (108) is on a second side of the sleeve opposite from the first side.

4. The relief valve as recited in claim 1, wherein the valve sleeve includes a tapered end facing and in fluid communication with the RV inlet port (110)

5. The relief valve as recited in claim 4, wherein the valve sleeve includes a stepped portion axially spaced apart from the tapered end, wherein an outer surface of the stepped portion is in fluid communication with the RV control pressure port (108).

6. A system comprising:
a variable displacement pump (VDP) in fluid communication with an inlet line and with an outlet line, wherein the VDP includes a variable displacement mechanism configured to vary pressure to the outlet line;
the relief valve of claim 1 including an RV outlet in fluid communication with a bypass line; and
an actuator operatively connected to the control pressure port (108) of the RV to change function of the RV between the first function and the second function.

7. The system as recited in claim 6, wherein the RV includes a valve sleeve configured and adapted to translate axially along a longitudinal RV axis depending on the pressure in at least one of the RV inlet port (110) or the RV control pressure port (108).

8. The system as recited in claim 7, wherein the RV includes a biasing element on a first side of the sleeve opposite from the RV inlet port (110), and optionally wherein the control pressure port (108) is on a second side of the sleeve opposite from the first side.

9. The system as recited in claim 7, wherein the valve sleeve includes a tapered end facing and in fluid communication with the RV inlet port (110).

10. The system of claim 9, wherein the valve sleeve includes a stepped portion axially spaced apart from the tapered end, wherein an outer surface of the stepped portion is in fluid communication with the RV control pressure port (108).

11. The system as recited in claim 6, further comprising a shut-off valve downstream from the VDP, wherein when the shut-off valve is in the closed position, the RV is configured and adapted to switch to the wind milling bypass function, or further comprising a shut-off valve downstream from the VDP, wherein when the shut-off valve is in the open position, the RV is configured and adapted to switch to the high pressure relief valve function.

12. A method comprising:
receiving input indicative of flow demanded by a downstream system supplied from an outlet line of a variable displacement pump "VDP"; and
controlling a relief valve "RV" to operate as a high pressure relief valve if the flow demanded by the downstream system is greater than a low flow threshold, and to recirculate flow from the outlet line to an input line in a windmill bypass function of the RV if the flow demanded by the downstream system is at or below the low flow threshold.

13. The method as recited in claim 12, further comprising controlling an actuator operatively connected to control the RV to change function of the RV between a high pressure relief valve function and a windmill bypass function.

14. The method as recited in claim 12, wherein changing to the high-pressure relief valve function from the windmill bypass function includes supplying a first pressure from the actuator to a RV control pressure port (108).

15. The method as recited in claim 14, wherein changing between from the high-pressure relief valve function to the windmill bypass function includes supplying a second pressure from the actuator to the RV control pressure port (108), and optionally wherein the second pressure is greater than the first pressure.

## Patentansprüche

1. Überdruckventil "RV" (relief valve), umfassend:
ein Ventilgehäuse (118), beinhaltend:
einen Steuerdruck-Anschluss (108) in Fluidverbindung mit einem Aktuator;
einen RV-Einlassanschluss (110) in Fluidverbindung mit einer Auslassleitung einer Verstellpumpe, wobei das RV ausgelegt und angepasst ist, um zwischen einer ersten Funktion und einer zweiten Funktion zu wechseln, wobei die erste Funktion eine Hochdruck-Überdruckventil-Funktion ist und die zweite Funktion eine Windmühlen-Bypass-Funktion ist, und **dadurch gekennzeichnet, dass** es ferner eine Ventilhülse umfasst, die innerhalb des Ventilgehäuses (118) positioniert ist, wobei die Ventilhülse axial entlang einer Längs-RV-Achse transliert, abhängig von dem Druck in mindestens einem von dem RV-Einlassanschluss (110) oder dem Steuerdruck-Anschluss (108).

2. Überdruckventil nach Anspruch 1, ferner umfassend ein Vorspannelement auf einer ersten Seite der Hülse gegenüber von dem RV-Einlassanschluss (110).

3. Überdruckventil nach Anspruch 2, wobei der Steuerdruck-Anschluss (108) auf einer zweiten Seite der Hülse gegenüber von der ersten Seite ist.

4. Überdruckventil nach Anspruch 1, wobei die Ventilhülse ein konisches Ende beinhaltet, das dem RV-Einlassanschluss (110) zugewandt ist und in Fluidverbindung mit diesem steht.

5. Überdruckventil nach Anspruch 4, wobei die Ventilhülse einen Stufenabschnitt beinhaltet, der axial beabstandet von dem konischen Ende ist, wobei eine Außenfläche des Stufenabschnitts in Fluidverbindung mit dem RV-Steuerdruck-Anschluss (108) ist.

6. System, umfassend:
eine Verstellpumpe (variable displacement pump - VDP) in Fluidverbindung mit einer Einlassleitung und mit einer Auslassleitung, wobei die VDP einen Verstellmechanismus beinhaltet, der ausgelegt ist, um den Druck zu der Auslassleitung zu variieren;
das Überdruckventil nach Anspruch 1, beinhaltend einen RV-Auslass in Fluidverbindung mit einer Bypassleitung; und
einen Aktuator, der operativ mit dem Steuerdruck-Anschluss (108) des RV verbunden ist, um die Funktion des RV zwischen der ersten Funktion und der zweiten Funktion zu ändern.

7. System nach Anspruch 6, wobei das RV eine Ventilhülse beinhaltet, die ausgelegt und angepasst ist, um axial entlang einer Längs-RV-Achse zu translieren, abhängig von dem Druck in mindestens einem von dem RV-Einlassanschluss (110) oder dem RV-Steuerdruck-Anschluss (108).

8. System nach Anspruch 7, wobei das RV ein Vorspannelement auf einer ersten Seite der Hülse gegenüber von dem RV-Einlassanschluss (110) beinhaltet, und optional wobei der Steuerdruck-Anschluss (108) auf einer zweiten Seite der Hülse gegenüber von der ersten Seite ist.

9. System nach Anspruch 7, wobei die Ventilhülse ein konisches Ende beinhaltet, das dem RV-Einlassanschluss (110) zugewandt ist und in Fluidverbindung mit diesem steht.

10. System nach Anspruch 9, wobei die Ventilhülse einen Stufenabschnitt beinhaltet, der axial beabstandet von dem konischen Ende ist, wobei eine Außenfläche des Stufenabschnitts in Fluidverbindung mit dem RV-Steuerdruck-Anschluss (108) ist.

11. System nach Anspruch 6, ferner umfassend ein Absperrventil nachgeschaltet von der VDP, wobei, wenn das Absperrventil in der geschlossenen Position ist, das RV ausgelegt und angepasst ist, um zu der Windmühlen-Bypass-Funktion zu wechseln, oder ferner umfassend ein Absperrventil nachgeschaltet von der VDP, wobei, wenn das Absperrventil in der offenen Position ist, das RV ausgelegt und angepasst ist, um zu der Hochdruck-Überdruckventil-Funktion zu wechseln.

12. Verfahren, umfassend:
Empfangen einer Eingabe, die einen Durchfluss anzeigt, der von einem nachgeschalteten System gefordert wird, das von einer Auslassleitung einer Verstellpumpe "VDP" versorgt wird; und
Steuern eines Überdruckventils "RV", um als ein Hochdruck-Überdruckventil zu arbeiten, wenn der von dem nachgeschalteten System geforderte Durchfluss größer als eine Niedrigdurchflussschwelle ist, und um Durchfluss von der Auslassleitung zu einer Eingangsleitung in einer Windmühlen-Bypass-Funktion des RV zu rezirkulieren, wenn der von dem nachgeschalteten System geforderte Durchfluss bei oder unter der Niedrigdurchflussschwelle ist.

13. Verfahren nach Anspruch 12, ferner umfassend das Steuern eines Aktuators, der operativ verbunden ist, um das RV zu steuern, um die Funktion des RV zwischen einer Hochdruck-Überdruckventil-Funktion und einer Windmühlen-Bypass-Funktion zu ändern.

14. Verfahren nach Anspruch 12, wobei das Wechseln zu der Hochdruck-Überdruckventil-Funktion von der Windmühlen-Bypass-Funktion das Zuführen eines ersten Drucks von dem Aktuator zu einem RV-Steuerdruck-Anschluss (108) beinhaltet.

15. Verfahren nach Anspruch 14, wobei das Wechseln von der Hochdruck-Überdruckventil-Funktion zu der Windmühlen-Bypass-Funktion das Zuführen eines zweiten Drucks von dem Aktuator zu dem RV-Steuerdruck-Anschluss (108) beinhaltet, und optional wobei der zweite Druck größer als der erste Druck ist.

## Revendications

1. Soupape de décharge « RV », comprenant :
un boîtier de soupape (118) comportant :
un orifice de pression de commande (108) en communication fluidique avec un actionneur ;
un orifice d'entrée (110) de RV en communication fluidique avec une conduite de sortie d'une pompe à cylindrée variable, dans laquelle la RV est configurée et adaptée pour passer d'une première fonction à une seconde fonction, dans laquelle la première fonction est une fonction de soupape de décharge haute pression et la seconde fonction est une fonction de dérivation en moulinet, et **caractérisée en ce qu'**elle comprend en outre un manchon de soupape positionné à l'intérieur du boîtier de soupape (118), dans laquelle le manchon de soupape se déplace axialement le long d'un axe longitudinal de RV en fonction de la pression dans au moins l'un de l'orifice d'entrée (110) ou de l'orifice de pression de commande (108) de RV.

2. Soupape de décharge selon la revendication 1, comprenant en outre un élément de sollicitation sur un premier côté du manchon opposé à l'orifice d'entrée (110) de RV.

3. Soupape de décharge selon la revendication 2, dans laquelle l'orifice de pression de commande (108) se trouve sur un second côté du manchon opposé au premier côté.

4. Soupape de décharge selon la revendication 1, dans laquelle le manchon de soupape comporte une extrémité conique faisant face à l'orifice d'entrée (110) de RV et en communication fluidique avec celui-ci.

5. Soupape de décharge selon la revendication 4, dans laquelle le manchon de soupape comporte une partie étagée espacée axialement de l'extrémité conique, dans laquelle une surface extérieure de la partie étagée est en communication fluidique avec l'orifice de pression de commande (108) de RV.

6. Système comprenant :
une pompe à cylindrée variable (VDP) en communication fluidique avec une conduite d'entrée et avec une conduite de sortie, dans lequel la VDP comporte un mécanisme à cylindrée variable configuré pour faire varier la pression vers la conduite de sortie ;
la soupape de décharge selon la revendication 1 comportant une sortie de RV en communication fluidique avec une conduite de dérivation ; et
un actionneur relié fonctionnellement à l'orifice de pression de commande (108) de la RV pour changer la fonction de la RV entre la première fonction et la seconde fonction.

7. Système selon la revendication 6, dans lequel la RV comporte un manchon de soupape configuré et adapté pour se déplacer axialement le long d'un axe longitudinal de RV en fonction de la pression dans au moins l'un de l'orifice d'entrée (110) de RV ou de l'orifice de pression de commande (108) de RV.

8. Système selon la revendication 7, dans lequel la RV comporte un élément de sollicitation sur un premier côté du manchon opposé à l'orifice d'entrée (110) de RV, et éventuellement dans lequel l'orifice de pression de commande (108) se trouve sur un second côté du manchon opposé au premier côté.

9. Système selon la revendication 7, dans lequel le manchon de soupape comporte une extrémité conique faisant face à l'orifice d'entrée (110) de RV et en communication fluidique avec celui-ci.

10. Système selon la revendication 9, dans lequel le manchon de soupape comporte une partie étagée espacée axialement de l'extrémité conique, dans lequel une surface extérieure de la partie étagée est en communication fluidique avec l'orifice de pression de commande (108) de RV.

11. Système selon la revendication 6, comprenant en outre une soupape d'arrêt en aval de la VDP, dans lequel, lorsque la soupape d'arrêt est en position fermée, la RV est configurée et adaptée pour passer à la fonction de dérivation en moulinet, ou comprenant en outre une soupape d'arrêt en aval de la VDP, dans lequel, lorsque la vanne d'arrêt est en position ouverte, la RV est configurée et adaptée pour passer à la fonction de soupape de décharge haute pression.

12. Procédé comprenant :
la réception d'une entrée indiquant un débit demandé par un système en aval alimenté par une conduite de sortie d'une pompe à cylindrée variable « VDP » ; et
la commande d'une soupape de décharge « RV » pour fonctionner comme une soupape de décharge haute pression si le débit demandé par le système en aval est supérieur à un seuil de débit bas, et pour faire recirculer le débit de la conduite de sortie vers une conduite d'entrée dans une fonction de dérivation en moulinet de la RV si le débit demandé par le système en aval est égal ou inférieur au seuil de débit bas.

13. Procédé selon la revendication 12, comprenant en outre la commande d'un actionneur relié fonctionnellement pour commander la RV de manière à changer la fonction de la RV entre une fonction de soupape de décharge haute pression et une fonction de dérivation en moulinet.

14. Procédé selon la revendication 12, dans lequel le passage à la fonction de soupape de décharge haute pression depuis la fonction de dérivation en moulinet comporte la fourniture d'une première pression de l'actionneur à un orifice de pression de commande (108) de RV.

15. Procédé selon la revendication 14, dans lequel le passage de la fonction de soupape de décharge haute pression à la fonction de dérivation en moulinet comporte la fourniture d'une seconde pression de l'actionneur à l'orifice de pression de commande (108) de RV, et éventuellement dans lequel la seconde pression est supérieure à la première pression.
